# EUROPÄISCHE PATENTSCHRIFT

(11) **EP 0 964 734 B1**
(45) Veröffentlichungstag und Bekanntmachung des Hinweises auf die Patenterteilung: **15.05.2002**
(21) Anmeldenummer: 98900809.9
(22) Anmeldetag: 23.01.1998
(51) Int. Cl.: B01D 21/24

(54) **EINRICHTUNG ZUR TRENNUNG VON SCHWIMMSCHICHTMASSE IN EINEM FLÜSSIGKEITSBECKEN**
DEVICE FOR SEPARATING FLOATING LAYERS IN A LIQUID BASIN
DISPOSITIF POUR LA SEPARATION DE COUCHES FLOTTANTES DANS UN BASSIN A LIQUIDES

(30) Priorität: 23.01.1997 AT 9697
(43) Veröffentlichungstag der Anmeldung: 22.12.1999
(73) Patentinhaber: Tschuda GmbH & Co. KG, 8051 Graz (AT)
(72) Erfinder: HEYEK, Kurt, A-8051 Graz (AT)
(74) Vertreter: Gibler, Ferdinand, Dipl.-Ing. Dr. techn.
(86) Internationale Anmeldenummer: AT9800013
(87) Internationale Veröffentlichungsnummer: WO9832515

(56) Entgegenhaltungen:
- EP-A- 0 815 912
- WO-A-92/01516
- WO-A-93/23334
- US-A- 3 447 683
- US-A- 3 709 357
- US-A- 4 196 087
- US-A- 4 784 764
- US-A- 5 242 600

## Beschreibung

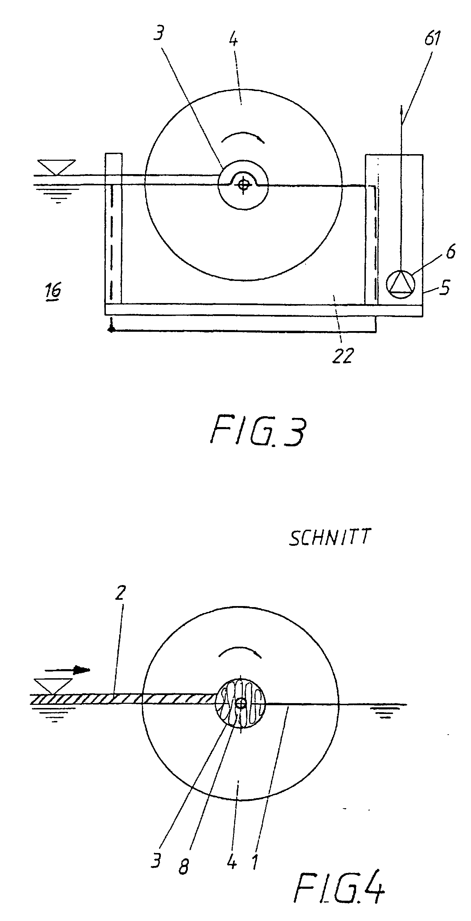

Die Erfindung betrifft eine Einrichtung zur Trennung von Schwimmschichtmasse, z.B. Schlamm, Schaum o.ä. von einer in einem Flüssigkeitsbecken, z.B. einem Klärbecken, darunter befindlichen, die Schwimmschicht tragenden Flüssigkeit, mit einer Fördereinrichtung, welche aus zumindest einem über eine Antriebseinheit angetriebenen, im Bereich der Flüssigkeitsoberfläche angeordneten Verdrängungskörper gebildet ist, welcher mit einer Schraubfläche versehen ist und der durch Rotation die Schwimmschichtmasse auf der Flüssigkeitsoberfläche zu einer Förderaustrittsvorrichtung für die Schwimmschichtmasse bewegt, wobei die Förderaustrittsvorrichtung eine an den Verdrängungskörper angrenzende Überlaufkante umfaßt.
Einrichtungen der vorstehend genannten Art werden überall dort eingesetzt, wo ein auf einer Flüssigkeit aufschwimmendes Medium, z.B. Schlamm oder Schaum, von dieser getrennt werden soll. Die häufigste Nutzung einer solchen Schlammtrennung bzw. -entnahme findet sich für den in Nachklärbecken oder Stofftrennungsanlagen auftretenden Schwimmschlamm. Dieser kann sich als Schwimmdecke mit einer Höhe von ungefähr bis zu 10 cm auf der Flüssigkeitsoberfläche ansammeln. Bei solchen Schichtstärken ist es besonders wichtig, daß die Abfuhr-Überlaufkante sehr genau zum Flüssigkeitsniveau eingestellt bleibt, um so das Absaugen des Gemisches aus Schwimmschichtmasse und Flüssigkeit möglichst ohne eine Verwirbelung der im Nachklärbecken verbleibenden Flüssigkeit zu bewirken. Andernfalls ergibt sich eine qualitativ schlechte Abtrennung der Schwimmschichtmasse.
Die bisher auf dem Gebiet der Kläranlagentechnik verwirklichten Lösungen scheitern alle daran, daß eine hohe Trenngüte nicht erzielt werden kann und noch dazu in den meisten Fällen eine Beaufsichtigung des Abtrennvorganges vonnöten ist, um das Funktionieren dieser Anlagen überhaupt zu ermöglichen. Dies verursacht somit relativ hohe Kosten bei einer eher geringen Effizienz.
So zeigt die WO-A-92/01516 eine Vorrichtung zur Trennung von Schwimmschlamm und Abwasser in einem geschlossenen Behälter, der einen unteren Abwassereinlaß und einen Abwasserauslaß mit einem Überlaufrohr aufweist, über welches eine Niveauregelung innerhalb des Abwasserbeckens vorgenommen werden kann. Im oberen Bereich des Behälters ist eine Förderschraube angeordnet, die an einem Ende über eine Antriebswelle mit einer ortsfesten Antriebseinheit verbunden ist und mit ihrem anderen Ende in einem Auslaßkonus gehalten ist, über den der Schlamm in ansteigender Richtung abtransportiert wird. Alternativ dazu sind auch Ausführungsformen gezeigt, in denen die Förderschraube zum Schlammtransport schräg ansteigend ausgerichtet ist. Die auftretenden Niveauänderungen des Flüssigkeitsspiegels werden über das Überlaufrohr gesteuert, während die Förderschraube selbst gegenüber dem Gehäuse fix angeordnet bleibt. Schwierigkeiten bereitet in der Praxis die Aufrechterhaltung eines konstanten Flüssigkeitsniveaus, das über das Überlaufrohr nur relativ träge auf konstanter Höhe gehalten werden kann. Wenn es für kurze Zeit zu einer Änderung der Eingreiftiefe der Förderschrauben kommt, kann es zu einer ungewollten Verwirbelung von Schwimmschicht und Flüssigkeit kommen. In vielen Anwendungsfällen sind auch konstante Förderverhältnisse von Schlamm zu Flüssigkeit in der Stufung von dickflüssig bis verdünnt erwünscht. Dies ist bei starr eingebauten Förderschrauben und schwankenden Flüssigkeitsniveaus nur sehr schwierig realisierbar, weshalb sich die Störungsanfälligkeit auch erhöht.
Weiters ist in der WO-A-95/23334 eine Vorrichtung zur Abtrennung von Schwimmschlamm beschrieben, bei der ein zylindrischer Rahmen mit darauf angebrachten wabenförmigen Lamellen innerhalb eines Beckens bewegt wird. Die Lamellen unterteilen den Beckeninhalt in einzelne Flüssigkeitssäulen, die gegeneinander abgedichtet sind, sodaß die einzelnen Lamellenkanäle keine Beeinträchtigungen durch die bei der Bewegung entstehenden Turbulenzen erfahren. Das Flüssigkeitsniveau liegt etwas über der oberen Kante der Lamellenanordnung, sodaß bei Rotation der Lamellen der aufschwimmende Schwimmschlamm in eine Mitnehmbewegung versetzt wird und dabei in einen Schlammsammler gefördert wird. Dieser weist einen Abstreifer und einen Schraubenförderer auf, der die auf diese Weise eingestreifte Schwimmmasse achsial zu einer Überlaufkante und in weiterer Folge in eine Sammelleitung bewegt. Aufgrund der feststehenden Anordnung der Förderschraube relativ zum Becken ergibt sich wieder eine starke Abhängigkeit der Trenngüte vom Flüssigkeitsstand im Becken. Eine unkontrollierte Vermengung von Klärwasser und Schwimmschlamm kann daher nicht verhindert werden.
In der US-PS-3 709 357 ist eine Anordnung gezeigt, mit der die Wasseroberfläche von einer schwimmenden Ölschicht befreit werden kann. Dabei erstreckt sich ein flexibler Schraubenförderer, der leichter als Wasser ausgebildet ist und daher auf dem Wasser schwimmt, zwischen zwei Booten. Der auf einem der Boote stationierte Antriebsmotor treibt den flexiblen Schraubenförderer an, welcher über seine Eigenrotation die Ölmasse zu einem Schlaucheintritt bewegt, über den diese in das Boot gebracht wird. Die Herstellung des schwimmenden Schraubenförderers erfolgt über verdrillte Kabelstränge, welche die Schraubenschaufeln um einen mittleren Strang in ihrer Position halten. Die Reinigung des Meerwassers von einem auf der Wasseroberfläche schwimmenden Ölteppich kann nur bedingt mit den Aufgaben verglichen werden, die in der Kläranlagentechnik zu lösen sind. Zum einen liegen bei einem Klärbecken völlig andere räumliche Bedingungen vor als auf offener See und zum ändern ist eine sich frei ausbreitende Ölschicht nicht vergleichbar mit den Schwimmschichtmassen, die etwa in einem Nachklärbecken auftreten können, welche bis zu 10 cm hoch sein können. Die in dieser Druckschrift gezeigten Seilkonstruktionen sind zur Förderung von Schwimmschlamm nicht denkbar, da die Faser- und Feststoffanteile der Schwimmschichten sofort an der großen, rauhen Oberfläche der Seilkonstruktionen anhaften und diese verstopfen würden, sodaß eine Förderung nicht möglich wäre. Weiters käme es auch in radialer Richtung zu einem Ankleben und zu einem Aufstauen von Schlamm an den Seilkonstruktionen, sodaß die achsiale Förderwirkung der Schrauben unwirksam werden würde. Die Förderung der schwimmenden Stoffe mittels der in der US-PS-3 709 357 gezeigten Anordnung ist jedenfalls ganz auf Flüssigkeiten ausgerichtet, die - wie aus Fig.2 dieser Druckschrift ersichtlich - über ein Schlauchstück in ein Ableitungsrohr gepumpt wird. Eine entsprechende Übertragung auf ein Nachklärbecken ist mit einer solchen Absaugung nicht möglich.
Weiters ist in der US-PS-4 196 087 ein schwimmendes System zur Entfernung von Oberflächenflüssigkeitsschichten geoffenbart. Ein zentraler Flüssigkeitssammelbehälter ist dabei von einem floßartigen Gebilde umgeben, welches für den Auftrieb der gesamten Einheit sorgt und seitliche Eingänge zur Aufnahme von schwimmenden Flüssigkeiten oder Verunreinigungen aufweist. Um das Sammelfloß herum sind radial sich erstreckende Schraubenförderer angeordnet, die aus schwimmfähigen Zylindern mit darauf angeordneten Schraubflächen bestehen und an einem Ende jeweils an eine Antriebseinheit zur Erzeugung ihrer Eigenrotation gekoppelt sind. Mit Hilfe dieser Schraubenförderer können die schwimmenden Flüssigkeiten zu den Sammeleingängen befördert werden, wo sie von einem weiteren System aus gegenläufigen Schrauben über eine Rampe in den Sammeltank befördert werden. Die Sammelstelle, von der aus die Schraubenförderer angetrieben werden, ist selbst schwimmend angeordnet, die Schraubenförderer sind allerdings weitgehend unterhalb der Flüssigkeitsoberfläche gelegen und somit für das verwirbelungsfreie Befördern von Schwimmschichtmasse nicht geeignet. Dieses Offshore-System bildet nicht ein Stau- und Fördersystem sondern nur ein Fördersystem mit anschließenden ansteigenden Abtransportelementen.
Aus der US-PS-3 447 683 geht eine- Einrichtung zur Abtrennung der auf einer Flüssigkeitsoberfläche aufschwimmenden Verunreinigungen hervor, die aus zwei miteinander in Verbindung stehenden Tanks besteht. Aus dem einen größeren Tank wird über einen Schraubenförderer die Schwimmschicht in den kleineren Tank getrieben, in dem sich eine dichte Schwimmschicht aufbaut, die aufgrund der Dichteunterschiede und der Verbindung über die kommunizierenden Tanks für eine Verbesserung des Abtrennvorganges sorgt. Die feststehende Anordnung des Schraubenförderers ermöglicht nur eine relativ ungenaue Schwimmschichttrennung.
Die US-PS-4 784 764 beschreibt eine Anordnung zur Ausflockung von Substanzen aus einer Suspension. Die ausgeflockten Stoffe werden dabei mittels einer Fördereinrichtung von der Flüssigkeitsoberfläche eines Beckens abgezogen und durch ein Abflußrohr abgeführt. Die Fördereinrichtung ist dabei aus einem in einer halbzylindrischen Rinne angeordneten Schraubenförderer (Fig.4) gebildet. Die Übertrittrinne liegt über dem Flockungsschicht-Niveau, über die die Schwimmschicht mittels eines Schaufelrades gehoben wird, welches eine Vermengung von Schwimmschichtmasse und Flüssigkeit verursacht, die die Trenngüte negativ beeinflußt.

Bekannt sind für einen solchen Zweck auch schwenkbare Rinnen, bei welchen die Überlautkante höhenverstellbar ist, sodaß durch Absenken derselben der Schwimmschlamm abgeführt werden kann. Es wird dabei die Überlaufkante über deren ganze Länge gleichmäßig gesenkt, wodurch aber Schwimmschlammpartikel unterschiedlich stark mit der darunter befindlichen Flüssigkeit gemischt werden und so in die Abzugsrinne gelangen, wodurch nur eine ungenaue Trennung zwischen der Schwimmschicht und der darunterliegenden Flüssigkeit erfolgt. Zudem kann sich diese Vorrichtung nicht oder nur in sehr beschränktem Maß an stark schwankende Flüssigkeitsniveaus anpassen.
Weiters sind Einrichtungen mit umlaufenden Kettentrieben und seitlich angeordneten Tauchwänden zur Abtrennung des Schwimmschlammes bereits bekannt, wobei sich vor den Tauchwänden die Schwimmschichtmasse sammelt, welche mit auf dem Kettentrieb montierten Paddeln seitlich zu einem Pumpenkasten gefördert und von dort abgesaugt wird. Die bewegten Antriebsteile unterliegen aber einer starken Abnützung und Korrosion, sodaß neben den außerordentlich hohen Herstellungskosten für eine solche Einrichtung oft anfallende Wartungsarbeiten durchzuführen sind, wodurch sich nur eine sehr geringe Rentabilität erzielen läßt. Ein weiterer Nachteil besteht darin, daß sich mit dieser Einrichtung nur eine einseitige Anströmung erzielen läßt.
Ein andere Möglichkeit der Schwimmschlammtrennung für Rundbecken bieten Einrichtungen mit einem ersten Schwimmschlammschild, gegen das ein zeitweise vorauslaufendes zweites Schwimmschlammschild periodisch zu einem kanalförmigen Abstand zusammengefahren wird. In der zusammengefahrenen Stellung bilden diese zwei Schwimmschlammschilde einen Kanal, in dem dann einzelne Paddel den Schwimmschlamm zur Absaugstelle treiben. Auch diese Einrichtungen weisen den Nachteil sehr hoher Herstellungskosten und Wartungsaufwendungen auf und wirken bei Anströmung der Einrichtung von einer Seite her.
Es sind auch schon drehend angetriebene Abzugsrohre mit Schlitzen und Schaufeln bekanntgeworden, die abhängig von der Drehbewegung Schwimmschlamm in die Schlitze einlaufen lassen. Nachteilig bei solchen Einrichtungen ist aber die sehr geringe Trenngenauigkeit zwischen Schwimmstoff und schädlichem Klarwasseranteil, da keine Rücksicht darauf genommen wird, wieviel Schwimmschichtmenge über die gesamte Zulaufbreite anfällt.
Schließlich existieren auch Einrichtungen, welche aus Schwimmschlamm-Ablaufrinnen mit schrägen Anströmebenen vor den Einlaufkanten gebildet sind, über welche Kurbeltriebe die Schwimmschicht mit Bürstenleisten in die Rinne streifen.
Der Nachteil solcher Einrichtungen liegt darin, daß nur kurze Räumlängen realisiert werden können und daß schwankende Flüssigkeitsstände nur in beschränktem Ausmaß berücksichtigt werden können-und daß sie nur bei einseitiger Anströmung wirken.
Ein weiterer Nachteil, der für alle vorgenannten Einrichtungen zutrifft, ergibt sich aus dem Umstand, daß sich Schwimmstoffmasse teilweise stark anlegen kann und auf den nicht benetzten Stellen der Einrichtung dauerhaft antrocknet. Die dafür erforderlichen Reinigungsarbeiten senken die Einsatzbereitschaft erheblich.

Aufgabe der Erfindung ist es daher, eine Einrichtung der eingangs genannte Art zu schaffen, mit der die vorstehend aufgezählten Nachteile vermieden werden und mit der eine Abtrennung von Schwimmschlamm unabhängig von der Höhe des jeweiligen Flüssigkeitsstandes im Becken erreicht werden kann.
Weitere Aufgabe der Erfindung ist es, eine sorgfältige Förderung von Schwimmschichtmasse und einer Trennung von der darunterliegenden Flüssigkeit unabhängig davon vorzunehmen, wieviel Schwimmstoff über die Länge der Entnahmevorrichtung anfällt.
Weitere Aufgabe der Erfindung ist es, eine Anströmung der Einrichtung durch Schwimmschlamm von beiden Seiten zu ermöglichen, sodaß auch störende Einflüsse wie die Windeinwirkung in runden Klärbecken ausgeschaltet werden können.
Weitere Aufgabe ist es, insbesondere eine Einrichtung anzugeben, mit der die in Kläranlagen auftretenden Schwimmschichtmassen abgetrennt werden können, welche als Schwimmdecken mit bis zu ungefähr 10 cm Höhe auftreten können.
Weitere Aufgabe ist es, eine hohe Trenngüte vollautomatisch erzielen und damit eine Beaufsichtigung vermeiden zu können.

Dies wird erfindungsgemäß dadurch erreicht, daß der zumindest eine Verdrängungskörper als ein Schwimmkörper ausgebildet ist, sodaß dieser auf der Flüssigkeitsoberfläche schwimmend rotiert, und daß der Schwimmkörper derart mit der Antriebseinheit verbunden ist, daß der Schwimmkörper bei einer Änderung des Flüssigkeitstands im Flüssigkeitsbecken auf der Flüssigkeitsoberfläche schwimmen bleibt.
Das Verdrängungsvolumen des erfindungsgemäßen Schwimmkörpers ist dabei so ausgelegt, daß genügend Auftriebskraft in der Flüssigkeit des Beckens auf ihn wirkt, um ein Schwimmen sicher zu gewährleisten. Durch das Schwimmen auf der Flüssigkeitsoberfläche erfolgt eine selbsttätige Anpassung an unterschiedliche Flüssigkeitsniveaus, wobei die erfindungsgemäße Einrichtung Schwimmschichtmasse ständig in Richtung des Förderaustrittsbereiches fördert, aus dem der Schlamm ausgepumpt werden kann. Ein gewichtiger Vorteil der schwimmenden Verdrängungskörper besteht darin, daß deren dem Antrieb dienende Lagerstellen keine vertikalen Kräfte aufnehmen müssen und die horizontal wirkenden Kräfte minimal sind, sodaß nur geringste oder keine Abnützungen der Lagerstellen auftreten. Dies ermöglicht einen äußerst dauerhaften Betrieb mit geringem Wartungsaufwand, was besonders einem vollautomatischen Betrieb zugute kommt. Dies auch deshalb, weil bestehende Einrichtungen dieser Art gerade aufgrund der hohen Ausfallsrate und Wartungskosten betriebswirtschaftlich nicht sinnvoll geführt werden können.
Aufgrund der Ausbildung der Fördereinrichtung als Verdrängungskörper kann eine Förderung von Schwimmschichtmasse zu einem Förderaustrittsbereich sehr wirkungsvoll durchgeführt werden, ohne daß es dabei zu einer unterschiedlich starken Mitnahme von Schwimmschichtmasse kommen kann.
Ein weiterer Vorteil der erfindungsgemäßen Einrichtung besteht darin, daß auch hinter Räumbrücken infolge von Windeinflüssen sich bildende Schwimmschlammschichten von der Rückseite der erfindungsgemäßen Einrichtung erfaßt und in einen Pumpensumpf gefördert werden können. Die Antriebseinheit kann durch einen Motor, z.B. einen Elektromotor oder durch sonst zur Verfügung stehende Antriebseinheiten gebildet werden.

Besonders bevorzugt ist gemäß einer Ausführungsform ein konstanter Höhenabstand der Überlaufkante zur Flüssigkeitsoberfläche unabhängig vom jeweiligen Flüssigkeitsstand im Becken anzusehen.

Um eine sehr wirksame ständige Anpassung der Überlaufkante an den jeweiligen Flüssigkeitsstand zu erzielen, kann gemäß einer Variante der Erfindung ein Lager des Schwimm-Verdrängungskörpers mit einer vertikal verschiebbaren, die Überlaufkante ausbildenden Überlauf-Trennwand verbunden sein, sodaß der Höhenabstand der Überlaufkante zur Flüssigkeitsoberfläche unabhängig vom jeweiligen Flüssigkeitsstand im Becken durch die aufgrund von Änderungen des Flüssigkeitsstandes hervorgerufenen Vertikalbewegungen des Schwimmkörpers konstant ist.

In weiterer Ausbildung der Erfindung kann vorgesehen sein, daß der Schwimm-Verdrängungskörper um seine Längsachse drehbar gelagert ist, und daß die Überlaufkante am stirnseitigen Ende des zumindest einen Schwimm-Verdrängungskörpers angeordnet ist.
Aufgrund der dadurch ausführbaren Rotation um seine Längsachse ist eine Förderbewegung erzielbar, welche zur Trennung der Schwimmmasse von der Flüssigkeit vorteilhaft anwendbar ist.Die Überlaufkante wird dazu mit der Flüssigkeitsoberfläche mitgeführt, um immer die richtige Überlauf-Höhendifferenz zu erreichen. Das Mitführen kann auf verschiedene Weise, insbesondere auch durch direkte mechanische Kopplung mit dem Schwimmkörper geschehen.

In weiterer Ausbildung der Erfindung kann vorgesehen sein, daß die Schraubfläche auf dem Schwimm-Verdrängungskörper zumindest teilweise entlang der Längsachse verläuft, wobei bei Rotation des Schwimm-Verdrängungskörpers eine Förderung der Schwimmschichtmasse in Achsrichtung zur Förderaustrittsvorrichtung erfolgt.
Die auf dem Verdrängungskörper befindliche Schraubfläche treibt die auf der Flüssigkeitsoberfläche befindliche Schlamm-Masse aufgrund der schraubenden Bewegung entlang seiner Längsachse, wodurch auf einfache Art eine Förder- bzw. Trennbewegung erzielbar ist.

Gemäß einer anderen Variante der Erfindung kann vorgesehen sein, daß der Schwimm-Verdrängungskörper an eine im Flüssigkeitsbecken umlaufende Einrichtung, z.B. eine Räumerbrücke eines kreisrunden Nachklärbeckens, gekoppelt ist, sodaß der Schwimmkörper zusätzlich zu seiner schwimmenden Rotationsbewegung gemeinsam mit der Umlaufeinrichtung im Flüssigkeitsbecken umläuft.
Auf diese Weise bewegt sich die erfindungsgemäße Einrichtung mit der Räumerbrücke mit und fängt die sich ansammelnden Schlamm-Massen auf, um diese einem Purnpkasten zuzuführen.

In weiterer Ausbildung der Erfindung kann vorgesehen sein, daß der Schwimm-Verdrängungskörper durch ein an seinen Enden geschlossenes Rohr mit an diesen anschließenden Lagerstutzen und mit einer um den Rohrumfang angeordneten Schraubfläche gebildet ist.
Dadurch ist eine einfach ausführbare Form des Verdrängungskörpers für die erfindungsgemäße Einrichtung einsetzbar. Die Schraubfläche kann jedoch in beliebig anderer Weise gestaltet werden, wenn damit eine Förderung der Schwimmschicht entlang der Längsachse des Schwimmkörpers durch Rotation desselben bewirkt wird.

Bei einer Ausgestaltung der Erfindung kann auch vorgesehen werden, daß die Schraubfläche aus einem oder mehreren schraubenförmig um den Rohrumfang angeformten Band bzw. Bändern gebildet ist.
Damit läßt sich eine störungsfreie und auch vollautomatische Förderung sehr vorteilhaft realisieren, da aufgrund der Bauweise der Schraubfläche auch sehr dicke Schwimmschichten ohne die geringsten Probleme hinsichtlich einer Verstopfung oder Inaktivierung der Schraubflächen förderbar sind.

Gemäß einem weiteren Ausführungsbeispiel der Erfindung können das oder die Bänder aus einer Vielzahl von entlang der Schraubfläche beabstandeten Bandstücken zusammengesetzt sein. Eine solcherart ausgebildete Schraubfläche ist besonders bei sehr unbeweglichen Schwimmmassen von Vorteil, da die Bandstücke zugleich ein Zerteilen derselben bewirken, womit zusammenhaftende Blöcke aus Schlamm sich leichter in Schraubrichtung fortbewegen lassen.

In weiterer Ausbildung der Erfindung kann vorgesehen sein, daß das Verhältnis von Schraubflächenaußendurchmesser zum Kerndurchmesser im Bereich von 2 bis 10 liegt. Dadurch kann eine sehr hohe Förderleistung von Schwimmmasse erzielt werden, wobei auch die Herstellung eines als Schwimmkörper ausgeführten Verdrängungskörpers möglich ist.

Ein weiteres Merkmal der Erfindung kann darin bestehen, daß die Schraubfläche eine Steigung im Bereich von 20% bis 200% bezogen auf den Außendurchmesser der Schraubfläche aufweist. Dadurch wird ein Abgleiten des Schwimmschlammes von den Schraubflächen sichergestellt, sodaß ein nicht erwünschter Umwälz- bzw. Mischeffekt der Schwimmasse unterbleibt.

Um das Anwachsen des transportierten Schwimmschlammvolumens entlang der Förderrichtung besser bewältigen zu können, kann gemäß einer weiteren Ausführungsform der Erfindung vorgesehen sein, daß die Steigung der Schraubfläche in Richtung zur Förderaustrittsvorrichtung ansteigend ausgebildet ist.

Es kann auch die Schraubfläche einen über die Länge des Schwimm-Verdrängungskörpers unterschiedlichen Außendurchmesser aufweisen, entweder um Hindernissen im Becken auszuweichen oder um eine Anpassung an örtlich unterschiedlich starke Schwimmassemengen vorzunehmen.

Eine weitere Ausführungsform der Erfindung kann darin bestehen, daß der Schwimm-Verdrängungskörper an seinen Enden mittels vertikal verschiebbaren Gleitlagerstücken drehbar gelagert ist, sodaß der Schwimm-Verdrängungskörper in vertikaler Richtung ungehindert bewegbar ist. Dies ermöglicht auf einfache Weise eine selbsttätige Anpassung an den jeweiligen Flüssigkeitsstand.

In besonders bevorzugter Weise können die Gleitlagerstücke in senkrechten Führungsschienen an der umlaufenden Einrichtung oder ortsfest im Flüssigkeitsbecken angeordnet sein. Auf diese Weise kann der Schwimmkörper ohne Behinderung seiner Rotation in seiner vertikal verschiebbaren Position festgelegt werden.

Weiters kann vorgesehen sein, daß zwei, vorzugsweise gegenüberliegende, Überlauf-Trennwände des Pumpentroges jeweils mit einem der beiden stirnseitigen Enden eines von zwei Schwimm-Verdrängungskörpern verbunden sind. Dadurch ist es möglich, den Pumpentrog zentral anzuordnen und den Schwimmschlamm von zwei Seiten her in diesen abzuleiten.
In großen Rundbecken werden die Schwimmschichten hauptsächlich durch Windeinfluß getrieben, sodaß diese sich hauptsächlich am Umfang des Beckens und vor umlaufenden Hindernissen sammeln. Somit besteht eine besonders günstige Ausführungsform der erfindungsgemäßen Einrichtung darin, daß der zumindest eine Verdrängungskörper eine die Schwimmschlammmasse relativ zum Zentrum des Flüssigkeitsbeckens radial nach außen fördernde Schraubenbewegung ausführt, sodaß dieser den Schwimmschlammm in einen beispielsweise außen mit einer Räumerbrücke mitfahrenden Pumpensumpf fördert.

Um die Unsinkbarkeit des Profiles auch dann zu gewährleisten, wenn der Schwimm-Verdrängungskörper nicht vollkommen dicht ausgeführt ist, kann gemäß einer Variante der Erfindung vorgesehen sein, daß der Schwimm-Verdrängungskörper mit einer geschlossenporigen, dauerhaft schwimmfähigen Füllmasse, z.B. Polyurethanschaum, gefüllt ist.

Weiters kann vorgesehen sein, daß der Schwimm-Verdrängungskörper über eine vom Flüssigkeitsstand unabhängige Antriebswelle, vorzugsweise eine Kardanwelle, eine Schraubenfeder oder einen gewellten Schlauch aus Elastomerwerkstoff mit der Antriebseinheit verbunden ist, sodaß Höhenunterschiede zwischen der starren Motorabtriebswelle und der Mitte des Schwimmkörpers ausgeglichen werden können.

Ein weiteres Merkmal der Erfindung kann darin bestehen, daß zwei oder mehrere jeweils stirnseitig drehfest miteinander verbundene Schwimm-Verdrängungskörper ausgebildet sind, wobei die drehfeste Verbindung vorzugsweise gelenkig bzw. elastisch ist.
Dadurch können große Förderlängen ohne besonderen Fertigungsgenauigkeiten realisiert werden.

Gemäß einer anderen Variante der Erfindung kann für eine Förderung des Schwimmschlammes von zwei Seiten vorgesehen sein, daß zwei drehfest und gelenkig stirnseitig miteinander verbundene Schwimm-Verdrängungskörper mit gegenläufigen Schraubflächen ausgebildet sind, welche Schraubenflächen den Schwimmschlamm zu einer an der Verbindungsstelle vorgesehenen Überlaufkante fördern, wobei die freien Enden der Schwimmkörper jeweils mit einer Antriebseinheit verbunden sind.

Gemäß einer weiteren Variante der Erfindung kann vorgesehen sein, daß der Schwimm-Verdrängungskörper zwei auf diesem sich erstreckende Schraubflächen aufweist, welche bezüglich einer senkrecht zur Längsachse des Schwimm-Verdrängungskörpers auf halber Länge verlaufenden Spiegelebene symmetrisch sind, wobei die Schraubflächen im Bereich der Spiegelebene über eine Überlaufkante in einen Pumpenkasten münden, der mittels eines Faltenbalges vertikal beweglich mit dem Schwimm-Verdrängungskörper verbunden ist.
Dadurch wird verhindert, daß einseitig wirkende Kräfte eine Schiefstellung des Schwimm-Verdrängungskörpers bewirken können. Durch die Verwendung der Faltenbälge, welche praktisch keinen Verschiebewiderstand aufweisen, ist eine sehr reibungsarme Mitbewegung der Überlaufkante mit dem Flüssigkeitsniveau möglich.

In weiterer Ausbildung der Erfindung kann vorgesehen sein, daß die Antriebseinheit der Schwimm-Verdrängungskörper durch im Bereich der Überlaufkante angeordnete Trübungssensoren gesteuert ist. Dadurch kann eine Steuerung der Einrichtung nach dem jeweiligen Bedarf vorgenommen werden, also wenn die angesammelte Schwimmschichtmasse eine Trübung der Flüssigkeit in der Nähe der Überlaufkante bewirkt hat.

Die Erfindung wird nachfolgend anhand der in den Zeichnungen dargestellten Ausführungsbeispiele eingehend erläutert. Es zeigt dabei
Fig. 1 einen Aufriß einer Ausführungsform einer erfindungsgemäßen Einrichtung;
Fig.2 einen Grundriß der Einrichtung gemäß Fig. 1;
Fig.3 eine Seitenansicht der Einrichtung der Fig.1 vom Pumpentrog her;
Fig.4 einen Schnitt durch eine weitere Ausführungsform einer erfindungsgemäßen Einrichtung;
Fig.5, Fig.6, Fig.7 jeweils einen Grundriß einer weiteren Ausführungsform der erfindungsgemäßen Einrichtung;
Fig.8a und Fig.8b einen Grund- und Aufriß einer weiteren Ausführungsform einer erfindungsgemäßen Einrichtung;
Fig.9 und 10 jeweils eine Seitenansicht eines Verdrängungskörpers mit Schraubfläche für eine Ausführungsform einer erfindungsgemäßen Einrichtung und
Fig.11a und 11b eine einen Grund- und Aufriß einer weiteren Ausführungsform einer erfindungsgemäßen Einrichtung.

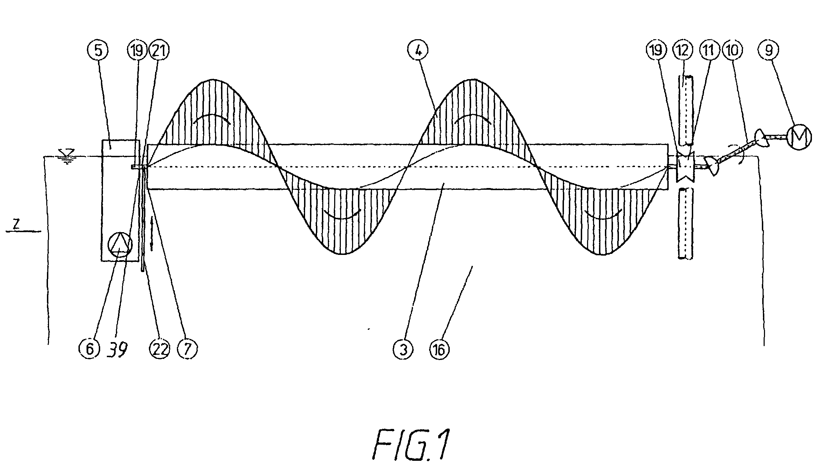

Fig. 1 bis 3 zeigt ein Klärbecken 16 mit einer darin enthaltenen Flüssigkeit 1 und einer darauf befindlichen Schwimmschicht 2. Eine Einrichtung zur Trennung von Schwimmschichtmasse von der Flüssigkeit trennt das aufschwimmende Gut mit Hilfe einer drehbar gelagerten Fördereinrichtung 3, welche die Schwimmschichtmasse zu einem Förderaustrittsbereich, in diesem Beispiel einen Pumpentrog 5 mit einer Überlaufkante 7 und darin befindlicher Tauchpumpe 6 zur Entfernung des Schwimmstoff-Flüssigkeitsgemisches über die Ableitung 61 bewegt. Die Erfindung kann für beliebige Formen von Flüssigkeitsbecken und Arten von Flüssigkeiten eingesetzt werden. Im gezeigten Beispiel wird der bei der Klärung anfallende Schwimmschlamm auf der Flüssigkeitsoberfläche abgetrennt, es kann die Erfindung aber auch für andere Arten von auf Flüssigkeiten aufschwimmenden Bestandteilen verwendet werden.
Erfindungsgemäß ist die Fördereinrichtung aus einem Verdrängungskörper 3 gebildet. Gemäß dem in Fig.1 gezeigten Ausführungsbeispiel wird die Förderung des Schlammes durch einen um seine Längsachse drehbaren Verdrängungskörper 3 mit einer darauf angeordneten, entlang der Längsachse verlaufenden Schraubfläche 4 gebildet. Der Verdrängungskörper ist in diesem Ausführungsbeispiel so gestaltet, daß er einen Schwimmkörper 3 bildet, also aufgrund seines Verdrängungsvolumens auf der Flüssigkeitsoberfläche schwimmt und dabei Schwankungen im Füllstand des Beckens ohne Hilfsmittel mitvollzieht. Eine als Elektromotor 9 ausgeführte Antriebseinheit versetzt den Schwimmkörper 3 mit seiner Schraubfläche 4 in eine Rotation um seine Längsachse. Die Antriebsübertragung vom Motor 9 auf den Schwimmkörper 3 über eine Kardanwelle 10 erlaubt einen vom jeweiligen Flüssigkeitsstand im Becken unabhängigen Betrieb. Zu diesem Zweck können noch weitere andere mechanische Mittel wie etwa eine Schraubenfeder oder ein gewellter Schlauch aus Elastomerwerkstoff eingesetzt werden.

Um die vertikale Bewegung des Schwimmkörpers bei Niveauschwankungen ohne Beeinflussung seiner schwimmenden Rotation zu ermöglichen, ist dieser antriebsseitig in einem Gleitlager 11 drehbar gelagert, wobei sich infolge der Rotation der Schraubfläche 4 eine Förderung der Schwimmschichtmasse in Achsrichtung zu der im Bereich des stirnseitigen Endes des Schwimmkörpers 3 angeordneten Überlaufkante 7 einstellt. Über diese Überlaufkante 7 wird der Schlamm in den Pumpentrog 5 eingebracht. Der Höhenabstand der Überlaufkante zur Flüssigkeitsoberfläche wird dabei unabhängig vom jeweiligen Flüssigkeitsstand im Becken 16 konstant gehalten, sodaß immer die richtige Überlaufhöhe eingehalten wird.
Der Schwimmkörper 3 selbst ist durch ein an seinen Enden geschlossenes Rohr mit an diesen anschließenden Lagerstutzen 19 gebildet, zwischen welchen sich die um den Rohrumfang angeordnete Schraubfläche, welche als ein schraubenförmig um den Rohrumfang angeformtes Band 4 ausgeführt ist, erstreckt. Es sind vielfältige andere Bauformen der Schraubflächen im Rahmen der Erfindung denkbar, solange sie bei Rotation des Verdrängungskörpers den Schwimmschlamm auf der Flüssigkeitsoberfläche bewegen. Die Förderrichtung hängt dabei vom Schraubsinn ab. So können die Schraubflächen auch aus mehreren Bändern gebildet sein bzw. das Band 4 aus einer Vielzahl von entlang der Schraubfläche beabstandeten Bandstücken zusammengesetzt sein.
Eine besonders bevorzugte Ausführungsform besteht darin, wenn das Verhältnis von Schraubflächenaußendurchmesser zum Kerndurchmesser im Bereich von 2 bis 10 liegt. Im Falle eines schwimmenden Verdrängungskörpers unterliegt die Wahl des Verhältnisses den Anforderungen der Schwimmfähigkeit und ist daher entsprechend eingeschränkt. So kann mit einem Schraubenflächenaußendurchmessser von 1000 mm und einem Kerndurchmesser von 250 mm bei einer Wandstärke von 2mm eine Eintauchtiefe erzielt werden, die dem halben Kerndurchmesser entspricht, und dadurch eine besonders hohe Förderleistung von Schwimmmasse erreicht werden.
Bei fester Lagerung des Verdrängungskörpers kann das Verhältnis von Außendurchmesser zum Kerndurchmesser der Schraubfläche hingegen beliebig gewählt werden.
Die Neigung der Schraubfläche des beschriebenen Ausführungsbeispiels verläuft im Bereich des Kerndurchmessers wesentlich flacher, als im Bereich des Außendurchmessers, wodurch eine Steigungsangabe in Relation zur während einer Umdrehung überwundenen Wegdifferenz nicht sehr aussagekräftig ist. Als Anforderung ergibt sich, daß die Schraubfläche mindestens eine Neigung besitzen soll, die das Abgleiten der jeweiligen Schwimmmasse während ihrer Drehbewegung gewährleistet, sodaß keine Aufschaufelung der Schwimmmasse erfolgen kann. Bei der von in diesem Ausführungsbeispiel vorgesehenen Ausführungsform entspricht die Steigung etwa dem Außendurchmesser, also 1000 mm. Wie durch verschiedene Messungen ermittelt, liegt die bevorzugte Steigung im Bereich von 20% bis 200% bezogen auf den Außendurchmesser der Schraubfläche, mit welcher eine besonders effiziente Förderung des Schwimmschlammes gewährleistet ist. Es können aber auch außerhalb dieses Bereiches gelegene Steigungen für die erfindungsgemäße Einrichtung angewendet werden. Schließlich hat es sich für besonders dicke Schwimmmassen als besonders vorteilhaft erwiesen, wenn die Steigung der Schraubfläche in Richtung zum Förderaustrittsbereich ansteigend ausgebildet ist. Dadurch wird das naturgemäße Anwachsen der geförderten Schwimmmasse zum Förderaustrittsbereich hin berücksichtigt, sodaß eine reibungsarme Bewegung der Massen durchgeführt werden kann.
Weiters ist von großer Bedeutung, daß die Drehgeschwindigkeit der erfindungsgemäßen Einrichtung nicht zu groß ist, sondern so gewählt wird, daß die äußersten Begrenzungen der Schraubfläche keine größere Umfangsgeschwindigkeit besitzen als die Aufsteiggeschwindigkeit der Schwimmmasse in der Flüssigkeit beträgt, da bei größeren Geschwindigkeiten sonst Schwimmmassen auf der Abwärtsseite der Schraubfläche in die Flüssigkeit gedrückt und dadurch die Flüssigkeit wieder mit Schwimmschlamm durchsetzt bzw. durchmischt würde.
Die Drehrichtung der Schraubfläche wird jeweils so gewählt, daß die Schraubfläche die Schwimmmasse in ansteigender Bewegung zum Förderaustrittsbereich bewegt. Anders formuliert, soll sich also die Schraubfläche an der Anströmseite, auf der der Großteil der Schwimmmasse geschwommen kommt, relativ zur Flüssigkeitsoberfläche aufsteigend bewegen.
Die Lagerstutzen 19 sind antriebsseitig in einem vertikal verschiebbaren Gleitlagerstück 11 und auf der Seite 39 der Überlaufkante 7 in einem weiteren Lager 21 drehbar gelagert, welches mit einer vertikal verschiebbaren Überlauf-Trennwand 22 des Pumpentroges 5 verbunden ist, sodaß der Höhenabstand zwischen der Flüssigkeitsoberfläche und der auf der Überlauf-Trennwand ausgebildeten Überlaufkante durch die aufgrund von Änderungen des Flüssigkeitsstandes hervorgerufenen Vertikalbewegungen des Schwimmkörpers konstant ist. Somit zieht der Schwimmkörper 3 aufgrund seines Auftriebes in der Flüssigkeit 1 die Trennwand 22 mit der Überlaufkante 7 automatisch in die richtige Position. Die Niveauanpassung der Trennwand kann aber auch unabhängig davon von einer automatischen, z.B. motorgetriebenen Steuerung vollzogen werden.
Das Gleitlagerstück 11 ist in senkrechten Führungsschienen oder -profilen 12 ortsfest im Flüssigkeitsbecken angeordnet.
Um die Schwimmfähigkeit des Schwimmkörpers gegen ein Leckwerden des Rohres 3 zu sichern, ist dieser gemäß Fig.4 mit einer geschlossenporigen, dauerhaft schwimmfähigen Füllmasse 8, z.B. Polyurethanschaum, gefüllt. Es können dafür aber durchaus auch andere geeignete Materialien oder Gase Verwendung finden.

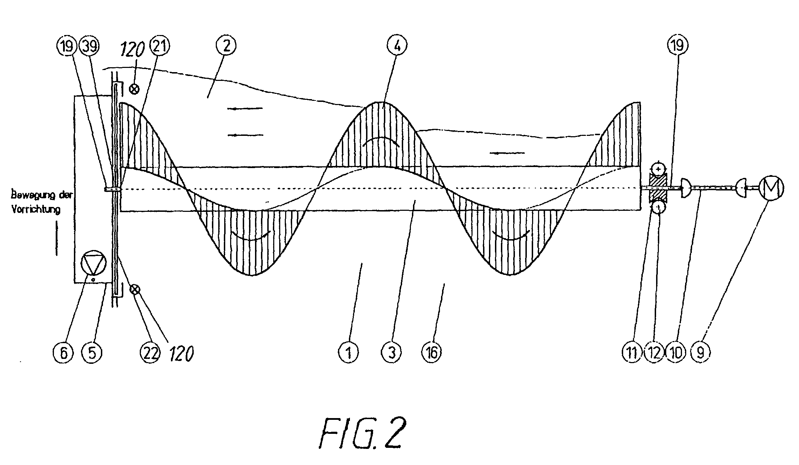

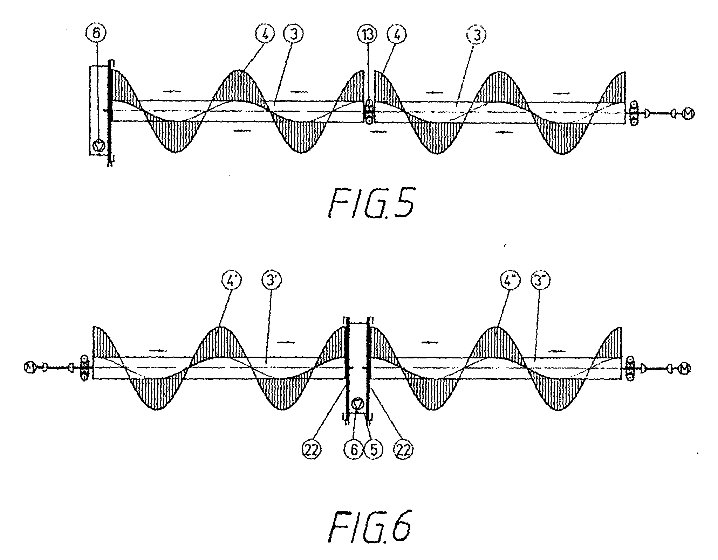

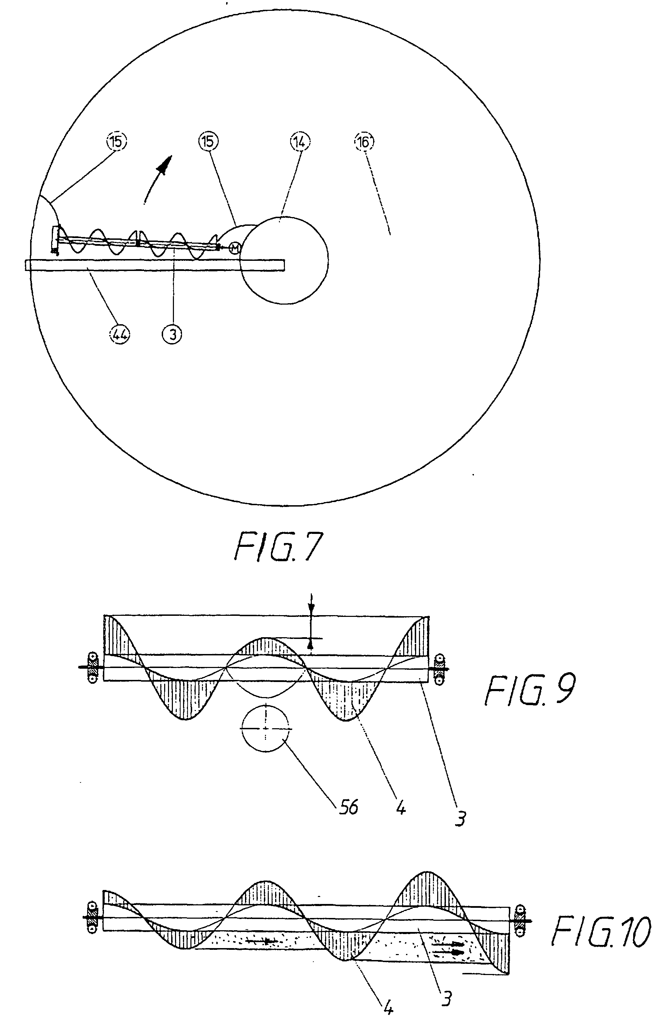

Fig. 7 zeigt eine Ausführungsform der Erfindung, bei der der Schwimmkörper 3 an eine im Flüssigkeitsbecken umlaufende Einrichtung gekoppelt ist, die hier durch eine um ein Mittelbauwerk 14 umlaufende Räumerbrücke 44 eines kreisrunden Nachklärbeckens 16' gebildet ist. Dadurch führt der Schwimmkörper zusätzlich zu seiner schwimmenden Rotationsbewegung gemeinsam mit der Umlaufeinrichtung im Flüssigkeitsbecken 16' eine Umlaufbewegung aus. Die Lagerung des Schwimmkörpers 3 kann wiederum wie in Fig. 1 und 2 durch Gleitlagerstücke realisiert werden, wobei die vertikalen Führungsschienen dafür an der umlaufenden Einrichtung festgelegt sind. Der zumindest eine Schwimmkörper 3 führt eine die Schwimmschlammmasse relativ zum Zentrum des Flüssigkeitsbeckens radial nach außen fördernde Schraubenbewegung aus, wobei Schwimmschlamm-Leitbleche 15 Schlamm aus den vom Schwimmkörper 3 nicht erreichbaren Bereichen des Beckens 16' den Schraubflächen des Schwimmkörpers 3 zuleiten.
Fig.8a und Fig.8b zeigt eine weitere Ausführungsform der Erfindung, in welcher ein Verdrängungskörper 31 nicht als Schwimmkörper dimensioniert, sondern in einem Rechteckbecken 16" mit einem linear umlaufenden Kettenräumer 46 ortsfest gelagert ist. Im Kläranlagenbau werden Becken dieser Art sehr häufig eingesetzt, bei welchen der umlaufende Kettenräumer 46 mit Räumbalken 45 im Bereich des Beckenbodens Sinkschlamm 47 (Fig. 8b) in einen Trichter 48 fördert und wechselwirkend Schwimmmasse 2 an der Flüssigkeitsoberfläche in Richtung zur erfindungsgemäßen Einrichtung 31 befördert. Da in einem solchen Becken die Flüssigkeitsschwankungen sich innerhalb bestimmter Grenzen bewegen, muß die erfindungsgemäße Einrichtung 31 nicht ständig an das Niveau angeglichen werden und kann daher mit ortsfesten Lagern versehen sein. Während die Räumbalken auf der Flüssigkeitsoberfläche ständig den Schwimmschlamm in Richtung zum Verdrängungskörper bewegen, bewegt dieser die anströmende Schwimmmassse ständig normal zur Räumbalkenbewegungsrichtung über die dafür vorgesehene Überlaufkante 7. Grundsätzlich kann jede für einen Schwimmkörper gedachte Ausführungsform auch in ortsfester Lagerung angewendet werden, wenn keine allzu großen Flüssigkeitsspiegelschwankungen im Becken auftreten.
In Fig.6 ist eine weitere Ausführungsform der Erfindung abgebildet, bei der Schwimmschlamm-Masse von zwei Seiten gefördert wird. Dafür sind zwei gegenüberliegende Überlauf-Trennwände 22 des Pumpentroges 5 jeweils mit einem der beiden stirnseitigen Enden von Schwimmkörper 3', 3" mit entgegengesetztem Schraubsinn verbunden.
Wenn sehr lange Fördereinrichtungen hergestellt werden sollen, können gemäß Fig. 5 zwei oder auch mehrere jeweils stirnseitig drehfest miteinander verbundene Schwimmkörper mit gleichem Schraubsinn ausgebildet sein, wobei die drehfeste Verbindung 13 vorzugsweise gelenkig bzw. elastisch ist.
Ein weiteres nicht dargestelltes erfindungsgemäßes Ausführungsbeispiel kann darin bestehen, daß zwei drehfest und gelenkig stirnseitig miteinander verbundene Schwimmkörper mit gegenläufigen Schraubflächen ausgebildet sind, welche jeweils von einem gemeinsamen Motor angetrieben werden. Die Schraubenflächen fördern den Schwimmschlamm zu einer an der Verbindungsstelle vorgesehenen Überlaufkante.

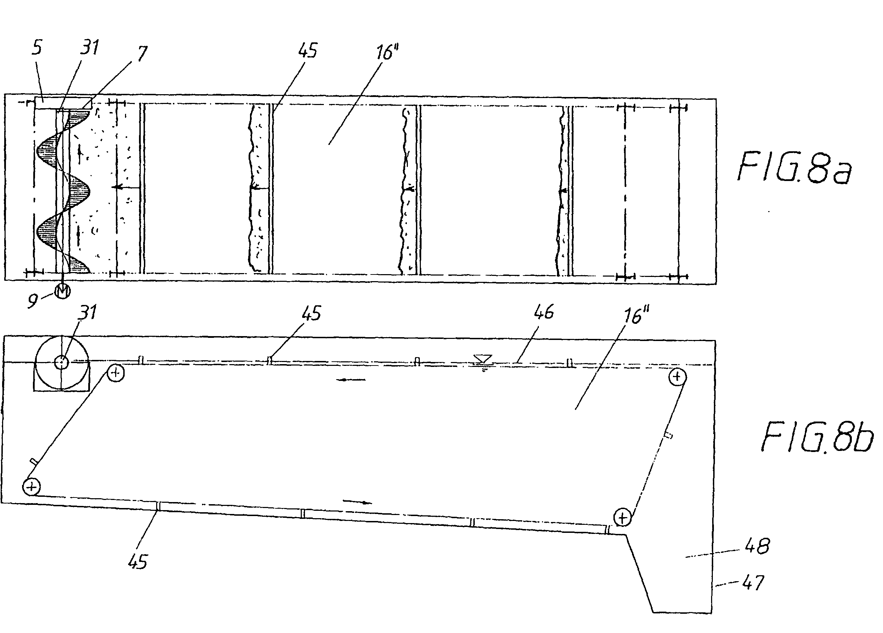

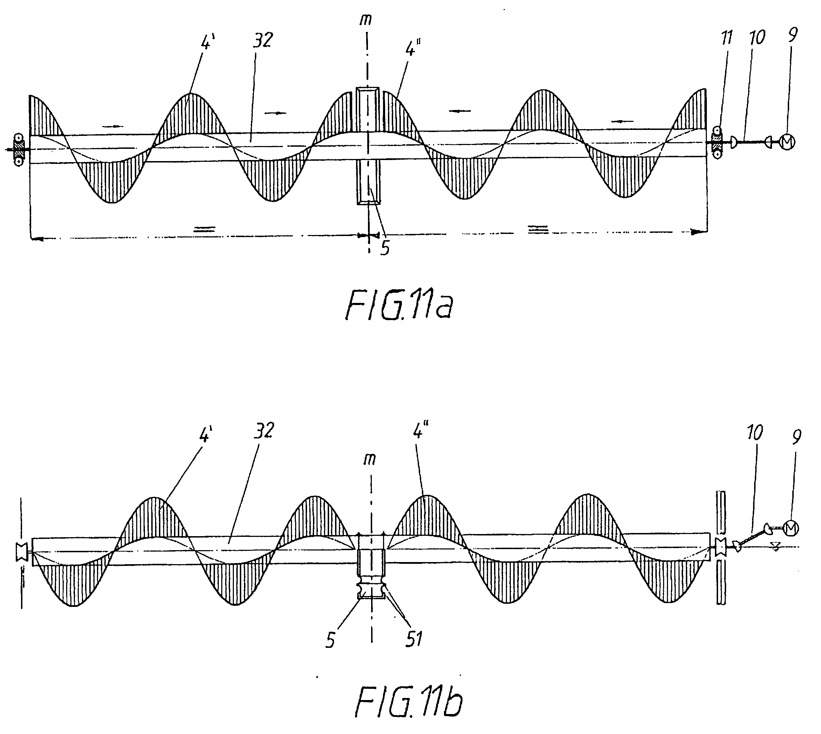

In Fig.11a und Fig.11b ist ein Schwimmkörper 32 mit einer exakt symmetrischen, gegenläufigen Schraubfläche 4', 4" bezüglich einer senkrecht zur Längsachse des Verdrängungskörpers auf halber Länge verlaufenden Spiegelebene m dargestellt, welche im Bereich der Spiegelebene m in einen Pumpenkasten 5 mündet, der wiederum mittels eines Faltenbalges 51 vertikal beweglich mit dem Schwimmkörper 32 verbunden ist. Durch diese Konstruktion wird bewirkt, daß keine einseitigen Kräfte auf den Schwimmkörper wirken können, die den Schwimmkörper schiefstellen. Naturgemäß bewirken Schiebermechanismen, wie der im Ausführungsbeispiel gemäß Fig.6 gezeigte, Reibungskräfte, welche auf den Schwimmkörper ungünstig wirken können. Durch die Verwendung von Faltenbälgen wie in Fig.11a und 11b, die sowohl in achsialer als auch in Querrichtung eingebaut sind, ergeben sich annähernd Kräfte, die sich im Gleichgewicht halten, sodaß lediglich geringfügige Kraftunterschiede in vertikaler Richtung zu führen sind, die sich aus dem unterschiedlichen Flüssigkeitsdruck auf die unterschiedlich hoch liegenden Faltenbälge ergeben. Bei Schieberkonstruktionen hängen die Betätigungskräfte dagegen von der anstehenden Flüssigkeitshöhe, der Größe der Verschmutzung und dem Reibungskoeffizienten zwischen Schieber und starrem Kasten ab. Auch bewirkt die Verschmutzung bei Schiebern eine stärkere Funktionsbeeinträchtigung als es bei rundum von Flüssigkeit beaufschlagten Faltenbälgen der Fall ist. Faltenbälge haben praktisch keine Verschiebewiderstände.Im Ausführungsbeispiel gemäß Fig. 9 und Fig. 10 ist eine Schraubfläche mit einem über die Länge des Verdrängungskörpers 3 unterschiedlichen Außendurchmesser dargestellt. In der Variante nach Fig. 9 wird dabei ein im Becken vorhandenes Hindernis 56 umgangen, wodurch die erfindungsgemäße Einrichtung auf einfache Weise an herrschende konstruktive Bedingungen anpaßbar ist. Die Variante nach Fig. 10 wiederum ermöglicht es, die Förderrate beispielsweise in Längsrichtung des Verdrängungskörpers zu erhöhen. Um eine dem jeweiligen Bedarf entsprechende Förderung des Schlammes zu erzielen, kann gemäß Fig. 2 die Antriebseinheit des Schwimmkörpers 3 durch im Bereich der Überlaufkante angeordnete Trübungssensoren 120 gesteuert sein. Dadurch kann ein automatisches Einschalten der erfindungsgemäßen Einrichtung erreicht werden, sobald die Schlammschichte eine bestimmte Dichte übersteigt, welche proportional der erfaßten Trübung ist.

## Patentansprüche

1. Einrichtung zur Trennung von Schwimmschichtmasse, z.B. Schlamm, Schaum o.ä. von einer in einem Flüssigkeitsbecken, z.B. einem Klärbecken, darunter befindlichen, die Schwimmschicht tragenden Flüssigkeit, mit einer Fördereinrichtung, welche aus zumindest einem über eine Antriebseinheit (9) angetriebenen, im Bereich der Flüssigkeitsoberfläche angeordneten Verdrängungskörper (3, 3', 3", 32) gebildet ist, welcher mit einer Schraubfläche (4) versehen ist und der durch Rotation die Schwimmschichtmasse auf der Flüssigkeitsoberfläche zu einer Förderaustrittsvorrichtung (5, 7) für die Schwimmschichtmasse bewegt, wobei die Förderaustrittsvorrichtung (5, 7) eine an den Verdrängungskörper (3, 3', 3", 32) angrenzende Überlaufkante (7) umfaßt, **dadurch gekennzeichnet, daß** der zumindest eine Verdrängungskörper als ein Schwimmkörper (3, 3', 3", 32) ausgebildet ist, sodaß dieser auf der Flüssigkeitsoberfläche schwimmend rotiert, und daß der Schwimmkörper (3, 3', 3", 32) derart mit der Antriebseinheit (9) verbunden ist, daß der Schwimmkörper (3, 3', 3", 32) bei einer Änderung des Flüssigkeitstands im Flüssigkeitsbecken (16, 16') auf der Flüssigkeitsoberfläche schwimmen bleibt.

2. Einrichtung nach Anspruch 1, **dadurch gekennzeichnet, daß** der Höhenabstand der Überlaufkante (7) zur Flüssigkeitsoberfläche unabhängig vom jeweiligen Flüssigkeitsstand im Becken (16, 16') konstant ist.

3. Einrichtung nach Anspruch 1 oder 2, **dadurch gekennzeichnet, daß** ein Lager (21) des Schwimm-Verdrängungskörpers (3, 3', 3") mit einer vertikal verschiebbaren, die Überlaufkante (7) ausbildenden Überlauf-Trennwand (22) verbunden ist, sodaß der Höhenabstand der Überlaufkante (7) zur Flüssigkeitsoberfläche unabhängig vom jeweiligen Flüssigkeitsstand im Becken (16, 16') durch die aufgrund von Änderungen des Flüssigkeitsstandes hervorgerufenen Vertikalbewegungen des Schwimmkörpers (3, 3', 3") konstant ist.

4. Einrichtung nach Anspruch 1, 2 oder 3, **dadurch gekennzeichnet, daß** der Schwimm-Verdrängungskörper (3, 3', 3") um seine Längsachse drehbar gelagert ist, und daß die Überlaufkante (7) am stirnseitigen Ende des zumindest einen Schwimm-Verdrängungskörpers (3, 3', 3") angeordnet ist.

5. Einrichtung nach einem der Ansprüche 1 bis 4, **dadurch gekennzeichnet, daß** die Schraubfläche (4) auf dem Schwimm-Verdrängungskörper (3, 3', 3", 32) zumindest teilweise entlang der Längsachse verläuft, wobei bei Rotation des Schwimm-Verdrängungskörpers (3, 3', 3", 32) eine Förderung der Schwimmschichtmasse in Achsrichtung zur Förderaustrittsvorrichtung (5, 7) erfolgt.

6. Einrichtung nach einem der Ansprüche 1 bis 5, **dadurch gekennzeichnet, daß** der Schwimm-Verdrängungskörper (3) an eine im Flüssigkeitsbecken (16') umlaufende Einrichtung, z.B. eine Räumerbrücke (44) eines kreisrunden Nachklärbeckens (16'), gekoppelt ist, sodaß der Schwimmkörper (3) zusätzlich zu seiner schwimmenden Rotationsbewegung gemeinsam mit der Umlaufeinrichtung im Flüssigkeitsbecken (16') umläuft.

7. Einrichtung nach einem der vorhergehenden Ansprüche, **dadurch gekennzeichnet, daß** der Schwimm-Verdrängungskörper durch ein an seinen Enden geschlossenes Rohr (3, 3', 3", 32) mit an diesen anschließenden Lagerstutzen (19) und mit einer um den Rohrumfang angeordneten Schraubfläche gebildet ist.

8. Einrichtung nach Anspruch 7, **dadurch gekennzeichnet, daß** die Schraubfläche aus einem oder mehreren schraubenförmig um den Rohrumfang angeformten Band (4, 4', 4") bzw. Bändern gebildet ist.

9. Einrichtung nach Anspruch 8, **dadurch gekennzeichnet, daß** das oder die Bänder (4, 4', 4") aus einer Vielzahl von entlang der Schraubfläche beabstandeten Bandstücken zusammengesetzt sind.

10. Einrichtung nach einem der vorhergehenden Ansprüche, **dadurch gekennzeichnet, daß** das Verhältnis von Schraubflächenaußendurchmesser zum Kerndurchmesser im Bereich von 2 bis 10 liegt.

11. Einrichtung nach einem der vorhergehenden Ansprüche, **dadurch gekennzeichnet, daß** die Schraubfläche eine Steigung im Bereich von 20 % bis 200% bezogen auf den Außendurchmesser der Schraubfläche aufweist.

12. Einrichtung nach einem der vorhergehenden Ansprüche, **dadurch gekennzeichnet, daß** die Steigung der Schraubfläche in Richtung zur Förderaustrittsvorrichtung ansteigend ausgebildet ist.

13. Einrichtung nach einem der vorhergehenden Ansprüche, **dadurch gekennzeichnet. daß** die Schraubfläche einen über die Länge des Schwimm-Verdrängungskörpers unterschiedlichen Außendurchmesser aufweist.

14. Einrichtung nach einem der vorhergehenden Ansprüche, **dadurch gekennzeichnet, daß** der Schwimm-Verdrängungskörper (3, 3', 3", 32) an seinen Enden mittels vertikal verschiebbaren Gleitlagerstücken (11) drehbar gelagert ist.

15. Einrichtung nach Anspruch 14, **dadurch gekennzeichnet, daß** die Gleitlagerstücke (11) in senkrechten Führungsschienen (12) an der umlaufenden Einrichtung oder ortsfest im Flüssigkeitsbecken angeordnet sind.

16. Einrichtung nach einem der vorhergehenden Ansprüche, **dadurch gekennzeichnet, daß** zwei, vorzugsweise gegenüberliegende, Überlauf-Trennwände (22) des Pumpentroges (5) jeweils mit einem der beiden stirnseitigen Enden eines von zwei Schwimm-Verdrängungskörpern (3', 3") verbunden sind.

17. Einrichtung nach einem der vorhergehenden Ansprüche, **dadurch gekennzeichnet, daß** der zumindest eine Schwimm-Verdrängungskörper (3) eine die Schwimmschlammmasse relativ zum Zentrum des Flüssigkeitsbeckens (16') radial nach außen fördernde Schraubenbewegung ausführt.

18. Einrichtung nach einem der vorhergehenden Ansprüche, **dadurch gekennzeichnet, daß** der Schwimm-Verdrängungskörper (3) mit einer geschlossenporigen, dauerhaft schwimmfähigen Füllmasse (8), z.B. Polyurethanschaum, gefüllt ist.

19. Einrichtung nach einem der vorhergehenden Ansprüche, **dadurch gekennzeichnet, daß** der Schwimm-Verdrängungskörper (3, 3', 3", 32) über eine vom Flüssigkeitsstand unabhängige Antriebswelle, vorzugsweise eine Kardanwelle (10), eine Schraubenfeder oder einen gewellten Schlauch aus Elastomerwerkstoff mit der Antriebseinheit verbunden ist.

20. Einrichtung nach einem der vorhergehenden Ansprüche, **dadurch gekennzeichnet, daß** zwei oder mehrere jeweils stirnseitig drehfest miteinander verbundene Schwimm-Verdrängungskörper (3) ausgebildet sind, wobei die drehfeste Verbindung (13) vorzugsweise gelenkig bzw. elastisch ist.

21. Einrichtung nach einem der vorhergehenden Ansprüche, **dadurch gekennzeichnet, daß** zwei drehfest und gelenkig stirnseitig miteinander verbundene Schwimm-Verdrängungskörper mit gegenläufigen Schraubflächen ausgebildet sind, welche Schraubenflächen den Schwimmschlamm zu einer an der Verbindungsstelle vorgesehenen Überlaufkante fördern, wobei die freien Enden der Schwimm-Verdrängungskörper jeweils mit einer Antriebseinheit verbunden sind.

22. Einrichtung nach einem der vorhergehenden Ansprüche, **dadurch gekennzeichnet, daß** der Schwimm-Verdrängungskörper (32) zwei auf diesem sich erstreckende Schraubflächen (4', 4") aufweist, welche bezüglich einer senkrecht zur Längsachse des Schwimm-Verdrängungskörpers (32) auf halber Länge verlaufenden Spiegelebene symmetrisch sind, wobei die Schraubflächen (4', 4") im Bereich der Spiegelebene über die Überlaufkante (7) in einen Pumpenkasten (5) münden, der mittels eines Faltenbalges (51) vertikal beweglich mit dem Schwimm-Verdrängungskörper (32) verbunden ist.

23. Einrichtung nach einem der vorhergehenden Ansprüche, **dadurch gekennzeichnet, daß** die Antriebseinheit (9) der Schwimm-Verdrängungskörper (3, 3', 3") durch im Bereich der Überlaufkante (7) angeordnete Trübungssensoren (120) gesteuert ist.

## Claims

1. A device for separating floating layers such as sludge, foam and the like from a liquid which is disposed in a liquid basin such as a settling basin, with the liquid being disposed beneath the floating layer and carrying the same, comprising a conveying device which is formed by at least one displacement body (3, 3', 3", 32) which is driven via a drive unit (9), is disposed in the zone of the surface of the liquid, is provided with a screw surface (4) and moves by rotation the floating layer on the surface of the liquid towards a conveying discharge apparatus (5, 7) for the floating layer, with the conveying discharge apparatus (5, 7) comprising an overflow edge (7) which is adjacent to the displacement body (3, 3', 3", 32), **characterized in that** the at least one displacement body is arranged as a floating body (3, 3', 3", 32), so that the same rotates while floating on the surface of the liquid and that the floating body (3, 3', 3", 32) is connected with the drive unit (9) in such a way that the floating body (3, 3', 3", 32) remains floating on the surface of the liquid when the liquid level changes in the liquid basin (16, 16').

2. A device as claimed in claim 1, **characterized in that** the level distance of the overflow edge (7) to the surface of the liquid is constant independent of the respective liquid level in the basin (16, 16').

3. A device as claimed in claim 1 or 2, **characterized in that** a bearing (21) of the floating displacement body (3, 3', 3") is connected to a vertically displaceable overflow separating wall (22) forming the overflow edge (7), so that the level distance of the overflow edge (7) to the surface of the liquid is constant independent of the respective liquid level in the basin (16, 16') by the vertical movements of the floating body (3, 3', 3") caused by changes in the liquid level.

4. A device as claimed in claim 1, 2 or 3, **characterized in that** the floating displacement body (3, 3', 3") is held rotatably about its longitudinal axis and that the overflow edge (7) is disposed at the face-sided end of the at least one floating displacement body (3, 3', 3").

5. A device as claimed in one of the claims 1 to 4, **characterized in that** the screw surface (4) on the floating displacement body (3, 3', 3", 32) extends at least partly along the longitudinal axis, with a conveyance of the floating layer occurring in the axial direction towards the conveying discharge apparatus (5, 7) during the rotation of the floating displacement body (3, 3', 3", 32).

6. A device as claimed in one of the claims 1 to 5, **characterized in that** the floating displacement body (3) is coupled to a device revolving in the liquid basin (16'), e.g. a rotating scraper bridge (44) of a circular final sedimentation basin (16'), so that the floating body (3), in addition to its floating rotary movement, revolves together with the revolving device in the liquid basin (16').

7. A device as claimed in one of the preceding claims, **characterized in that** the floating displacement body is formed by a pipe (3, 3', 3", 32) which is closed off at its ends and comprises pillow blocks (19) adjacent thereto and by a screw surface disposed about the circumference of the pipe.

8. A device as claimed in claim 7, **characterized in that** the screw surface is formed by one or several strips (4, 4', 4") which are attached in a screw-like manner about the circumference of the pipe.

9. A device as claimed in claim 8, **characterized in that** the strip or strips (4, 4', 4") is or are composed from a plurality of pieces of strip spaced along the screw surface.

10. A device as claimed in one of the preceding claims, **characterized in that** the ratio of the outside diameter of the screw surface to the core diameter is in the range of 2 to 10.

11. A device as claimed in one of the preceding claims, **characterized in that** the screw surface is provided with an incline in the range of 20% to 200% relating to the outside diameter of the screw surface.

12. A device as claimed in one of the preceding claims, **characterized in that** the incline of the screw surface is arranged so as to be ascending in the direction towards the conveying discharge apparatus.

13. A device as claimed in one of the preceding claims, **characterized in that** the screw surface is provided with an outside diameter which is different over the length of the floating displacement body.

14. A device as claimed in one of the preceding claims, **characterized in that** the floating displacement body (3, 3', 3", 32) is held at its ends in a rotatable fashion by means of vertically displaceable sliding bearing blocks (11).

15. A device as claimed in claim 14, **characterized in that** the sliding bearing blocks (11) are disposed in vertical guide rails (12) on the revolving device or in a stationary manner in the liquid basin.

16. A device as claimed in one of the preceding claims, **characterized in that** two preferably opposite overflow separating walls (22) of the pump trough (5) are each connected with one of the two face-sided ends of one of two floating displacement bodies (3', 3").

17. A device as claimed in one of the preceding claims, **characterized in that** the at least one floating displacement body (3) performs a screwing movement which conveys the floating layer in a radially outward manner relative to the center of the liquid basin (16').

18. A device as claimed in one of the preceding claims, **characterized in that** the floating displacement body (3) is filled with a closed-pored, permanently floating filling mass (8) such as polyurethane foam.

19. A device as claimed in one of the preceding claims, **characterized in that** the floating displacement body (3, 3', 3", 32) is connected with the drive unit via a drive shaft which is independent of the liquid level, preferably a cardan shaft (10), a helical spring or a wavy tube made of elastomeric material.

20. A device as claimed in one of the preceding claims, **characterized in that** two or more floating displacement bodies (3) are arranged which are each mutually connected in a torsionally rigid way on the face side, with the torsionally rigid connection (13) preferably being provided in a flexible or elastic manner.

21. A device as claimed in one of the preceding claims, **characterized in that** two floating displacement bodies which are mutually connected in a torsionally rigid and flexible way on the face side are provided with reverse screw surfaces which convey the floating layer to an overflow edge provided at the connection point, with the free ends of the floating displacement bodies each being connected with a drive unit.

22. A device as claimed in one of the preceding claims, **characterized in that** the floating displacement body (32) is provided with two screw surfaces (4', 4") which extend on the same and which are symmetrical with respect to a mirror plane extending vertical to the longitudinal axis of the floating displacement body (32) at half the length, with the screw surfaces (4', 4") opening over the overflow edge (7) into a pump box (5) in the zone of the mirror plane, which box is connected by means of a bellows (51) in a vertically movable way with the floating displacement body (32).

23. A device as claimed in one of the preceding claims, **characterized in that** the drive unit (9) of the floating displacement body (3, 3', 3") is controlled by turbidity sensors (120) disposed in the zone of the overflow edges (7).

## Revendications

1. Dispositif pour la séparation de couches flottantes, par exemple de boues, d'écume ou similaire, d'un liquide situé sous celles-ci et portant la couche flottante dans un bassin à liquides, par exemple un bassin de décantation, avec un dispositif de transport composé d'au moins un organe de refoulement (3, 3', 3", 32) disposé au niveau de la surface du liquide et entraîné par une unité d'entraînement (9), lequel est pourvu d'une surface hélicoïdale (4) et refoule par sa rotation les couches flottantes sur la surface du liquide vers un mécanisme d'évacuation (5, 7) des couches flottantes, le mécanisme d'évacuation (5, 7) comportant un rebord de déversoir (7) contigu à l'organe de refoulement (3, 3', 3", 32), **caractérisé en ce que** l'organe de refoulement au nombre d'un au moins est conçu comme un organe flottant (3, 3', 3", 32) qui tourne en flottant à la surface du liquide, et **en ce que** l'organe flottant (3, 3', 3", 32) est relié à l'unité d'entraînement (9) de telle sorte que l'organe flottant (3, 3', 3", 32) continue à flotter à la surface du liquide lorsque le niveau de liquide change dans le bassin à liquide.

2. Dispositif selon la revendication 1, **caractérisé à ce que** l'écart en hauteur entre le rebord de déversoir (7) et la surface du liquide est constant indépendamment du niveau de liquide dans le bassin (16, 16').

3. Dispositif selon la revendication 1 ou 2, **caractérisé en ce qu'**un support (21) de l'organe de refoulement flottant (3, 3', 3") est relié à une cloison de déversoir (22) mobile verticalement et formant le rebord de déversoir (7), de sorte que l'écart en hauteur entre le rebord de déversoir (7) et la surface du liquide est constant indépendamment du niveau de liquide dans le bassin (16, 16') grâce aux mouvements verticaux de l'organe flottant (3, 3', 3") provoqués par les changements du niveau de liquide.

4. Dispositif selon la revendication 1, 2 ou 3, **caractérisé en ce que** l'organe de refoulement flottant (3, 3', 3") est supporté de manière à pouvoir tourner autour de son axe longitudinal, et **en ce que** le rebord de déversoir (7) est disposé sur l'extrémité frontale du l'organe de refoulement flottant (3, 3', 3") au nombre d'un au moins.

5. Dispositif selon l'une quelconque des revendications 1 à 4, **caractérisé en ce que** la surface hélicoïdale (4) du l'organe de refoulement flottant (3, 3', 3", 32) court au moins partiellement le long de l'axe longitudinal, un transport des couches flottantes dans le sens de l'axe vers le mécanisme d'évacuation (5, 7) se produisant en cas de rotation du l'organe de refoulement flottant (3, 3', 3", 32).

6. Dispositif selon l'une quelconque des revendications 1 à 5, **caractérisé en ce que** le l'organe de refoulement flottant (3) est couplé à un dispositif faisant le tour du bassin à liquide (16'), par exemple un pont racleur (44) d'un bassin de décantation secondaire circulaire (16'), de telle sorte que l'organe flottant (3) circule dans le bassin à liquide (16') avec le dispositif faisant le tour de celui-ci en plus d'effectuer sa rotation.

7. Dispositif selon l'une quelconque des revendications précédentes, **caractérisé en ce que** le l'organe de refoulement flottant est conçu comme un tube (3, 3', 3", 32) fermé à ses extrémités, avec un goujon de support (19) relié au tube et une surface hélicoïdale disposée autour de la circonférence du tube.

8. Dispositif selon la revendication 7, **caractérisé en ce que** la surface hélicoïdale se compose d'une ou plusieurs bandes (4, 4', 4") formées en spirale sur la circonférence du tube.

9. Dispositif selon la revendication 8, **caractérisé en ce que** la ou les bandes (4, 4', 4") se composent d'une pluralité de morceaux de bande espacés le long de la surface hélicoïdale.

10. Dispositif selon l'une quelconque des revendications précédentes, **caractérisé en ce que** le rapport entre le diamètre extérieur de la surface hélicoïdale et le diamètre du centre est de l'ordre de 2 à 10.

11. Dispositif selon l'une quelconque des revendications précédentes, **caractérisé en ce que** la surface hélicoïdale présente une pente de 20 % à 200 % par rapport à son diamètre extérieur.

12. Dispositif selon l'une quelconque des revendications précédentes, **caractérisé en ce que** la pente de la surface hélicoïdale est croissante dans la direction du mécanisme d'évacuation.

13. Dispositif selon l'une quelconque des revendications précédentes, **caractérisé en ce que** la surface hélicoïdale présente un diamètre différent sur la longueur de l'organe de refoulement flottant.

14. Dispositif selon l'une quelconque des revendications précédentes, **caractérisé en ce que** l'organe de refoulement flottant (3, 3', 3", 32) est supporté avec possibilité de rotation à ses extrémité au moyen de paliers coulissants (11) mobiles verticalement.

15. Dispositif selon la revendication 14, **caractérisé en ce que** les paliers coulissants (11) sont disposés dans des rails de guidage (12) verticaux disposés sur le dispositif faisant le tour du bassin ou stationnaires dans le bassin à liquide.

16. Dispositif selon l'une quelconque des revendications précédentes, **caractérisé en ce que** deux cloisons de déversoir (22), de préférence se faisant face, dans l'auge de pompage (5) sont reliées chacune par l'une de leurs deux extrémités frontales à un élément d'une paire d'organes de refoulement flottants (3', 3").

17. Dispositif selon l'une quelconque des revendications précédentes, **caractérisé en ce que** l'organe de refoulement flottant (3) au nombre d'un au moins réalise un mouvement hélicoïdal refoulant les couches de boue flottantes dans le sens radial vers l'extérieur par rapport au centre du bassin à liquide (16').

18. Dispositif selon l'une quelconque des revendications précédentes, **caractérisé en ce que** l'organe de refoulement flottant (3) est rempli d'une masse de remplissage (8) à pores fermés et à flottabilité permanente, par exemple de la mousse de polyuréthane.

19. Dispositif selon l'une quelconque des revendications précédentes, **caractérisé en ce que** l'organe de refoulement flottant (3, 3', 3", 32) est relié à l'unité d'entraînement par un arbre d'entraînement indépendant du niveau du liquide, de préférence un arbre à cardan (10), un ressort hélicoïdal ou un tuyau ondulé en matériau élastomère.

20. Dispositif selon l'une quelconque des revendications précédentes, **caractérisé en ce qu'**il est prévu deux ou plusieurs organes de refoulement flottants (3) reliés entre eux de manière solidaire en rotation sur leurs faces frontales, la liaison (13) solidaire en rotation étant de préférence articulée ou élastique.

21. Dispositif selon l'une quelconque des revendications précédentes, **caractérisé en ce qu'**il est prévu deux organes de refoulement flottants articulés l'un à l'autre à leurs extrémités frontales et pourvus de surfaces hélicoïdales tournant dans des sens opposés, lesquelles surfaces hélicoïdales refoulent les boues flottantes vers un rebord de déversoir prévu au point de liaison, l'extrémité libre de chaque organe de refoulement flottant étant reliée à une unité d'entraînement.

22. Dispositif selon l'une quelconque des revendications précédentes, **caractérisé en ce que** l'organe de refoulement flottant (32) présente deux surfaces hélicoïdales (4', 4") s'étendant sur lui, qui sont symétriques par rapport à un plan de symétrie spéculaire perpendiculaire à l'axe longitudinal de l'organe de refoulement flottant (32) à mi-longueur de celui-ci, les surfaces hélicoïdales (4', 4") débouchant au niveau du plan de symétrie spéculaire, par-dessus le rebord de déversoir, dans un caisson de pompage (5) qui est relié de manière mobile verticalement au moyen d'un soufflet (51) à l'organe de refoulement flottant (32).

23. Dispositif selon l'une quelconque des revendications précédentes, **caractérisé en ce que** l'unité d'entraînement (9) des organes de refoulement flottants (3, 3', 3") est régulée par des capteurs de turbidité (120) disposés au niveau du rebord de déversoir (7).
